# EUROPEAN PATENT SPECIFICATION

(11) **EP 4 374 949 B1**
(45) Date of publication and mention of the grant of the patent: **29.01.2025**
(21) Application number: 23211686.3
(22) Date of filing: 23.11.2023
(51) Int. Cl.: B01D 53/02, B01D 53/14, C10G 25/00, C10G 31/09, C10G 45/02, C10G 65/12, C10G 67/06, C10G 69/02, C11B 13/00, C11C 3/00

(54) **COUPLING PROCESS FOR PRODUCING BIODIESEL FROM WASTE FOG**
KUPPLUNGSVERFAHREN ZUR HERSTELLUNG VON BIODIESEL AUS ABWASSERNEBEL
PROCÉDÉ DE COUPLAGE POUR PRODUIRE DU BIODIESEL À PARTIR DE BROUILLARD RÉSIDUAIRE

(30) Priority: 25.11.2022 CN 202211488975
(43) Date of publication of application: 29.05.2024
(73) Proprietor: Fuzhou University, 350108 Fuzhou Fujian (CN)
(72) Inventor: JIANG, Lilong, Fuzhou (CN); HUANG, Kuan, Fuzhou (CN); CAI, Zhenping, Fuzhou (CN); CAO, Yanning, Fuzhou (CN); MA, Yongde, Fuzhou (CN)
(74) Representative: Zhu, Junyi

(56) References cited:
- CN-A- 112 048 340
- CN-A- 114 574 234

## Description

### Technical Field

The present invention relates to the technical field of catalytic conversion of bio-FOG, particularly to a coupling process for producing biodiesel from a waste FOG.

### Background Art

The development and utilization of fossil resources have greatly promoted the progress of human civilization and the development of modern industry, but causes a series of environmental problems such as warming, acid rain, and haze. In addition, the fossil resources are non-renewable resources, and reserves thereof are becoming increasingly depleted with the rapid growth in the global population. Therefore, it is urgent to develop new green renewable energy. A renewable liquid fuel, i.e., biodiesel which is obtained by subjecting FOG such as animal fats and vegetable oils, microbial oils, and waste cooking oils that are used as raw materials to transesterification or hydrodeoxygenation reactions has received widespread attention and is one of the important development directions to reduce carbon emissions and cope with climate changes. Bio-FOG is composed of long-chain fatty acid glycerides, free fatty acids, etc., and has a carbon chain structure similar to that of petrochemical diesel. According to the forecast of International Energy Agency, the global annual demand of biodiesel will exceed 50 million tons, and the annual demand of biodiesel in China will reach 7.5 million tons by 2030. As compared with the animal fats and vegetable oils, waste FOG in China has a wider range of sources. About 11 million tons of waste FOG such as illegally recycled waste cooking oils, acidified oils, and hogwash oils are produced every year. Therefore, the development of a biodiesel preparation technology using waste FOG as a raw material has important strategic significance and industrial application prospects.

Biodiesel is mainly the first-generation biodiesel, i.e., a fatty acid methyl ester produced through a transesterification reaction. However, this type of biodiesel has problems such as a high oxygen content, poor stability, and poor low-temperature fluidity, and cannot be directly used as a fuel. This type of biodiesel is only used as an additive for petrochemical diesel. The addition amount of the first-generation biodiesel generally does not exceed 5%, which greatly limits an application value thereof. Therefore, the current research focus in this field is to hydrodeoxygenate FOG to obtain a hydrocarbon mixture with a similar composition to traditional petrochemical diesel, that is, second-generation biodiesel. The second-generation biodiesel has the advantages of a high cetane number, a low oxygen content, and high stability, and can be mixed with petrochemical diesel in any proportion. In the actual production process, branched alkane products are generated through a hydroisomerization process during hydrodeoxygenation, and as a result, a low-temperature flow performance of biodiesel is further reduced.

At present, there are many commercial cases reported on the generation of the second-generation biodiesel. Examples of the commercial cases include NExBTL technology developed by Neste Corporation in Finland, Ecofining technology jointly developed by UOP Corporation in the United States and ENI Corporation in Italy, and RN-OIL technology of Sinopec in China. However, higher-priced refined vegetable oils are mainly used as raw materials in most of the existing technologies. For example, edible FOG such as rapeseed oil and soybean oil is used as raw materials in the RN-OIL process, which competes with people for food. At the same time, when the waste FOG is used as raw materials in the existing process, the system is less likely to operate stably for a long period of time because a high content of impurities such as free fatty acids, phospholipids, metal ions, and water are present in the waste FOG so that a catalyst is powdered and inactivated. Therefore, there is an urgent need to develop a second-generation biodiesel production process using the waste FOG as raw materials to improve the production efficiency and economic benefits of the second-generation biodiesel.

CN112048340 discloses a method for producing second-generation bio-diesel and aviation fuel by a three-step combined process. CN114574234 describes a second-generation biodiesel production process in which the catalyst does not need to be frequently stopped and replaced, allowing it to operate stably for an extended period.

### Summary of Invention

In view of the shortcomings of the existing technology, the present invention provides a coupling process for producing biodiesel from a waste FOG. The production process is stable and reliable and has strong adaptability to raw materials. Raw materials such as catalysts and excessive hydrogen gas can be recycled during a production process to ensure long-term operation of a system.

The present invention adopts the following technical solutions.

A coupling process for producing biodiesel from a waste FOG includes:
a step S1 of preheating and dissolving a waste FOG, charging the dissolved waste FOG into a filter to remove solid impurities, and charging the filtrate and a certain amount of a short-chain alcohol and a liquid acid catalyst into a pre-esterification reactor for a pre-esterification reaction to generate a pre-esterified mixture;
a step S2 of charging the pre-esterified mixture into a liquid-liquid separator for liquid-liquid separation to separate out an aqueous phase and an organic phase, separating the organic phase using a second flash separator to obtain a pre-esterification product I and an alcohol solvent, and charging the pre-esterification product I into a water scrubber to remove metal ions to obtain an esterification product II;
a step S3 of pre-hydrogenating the esterification product II, an oil-soluble hydrogenation catalyst, a vulcanizator, and hydrogen gas in a suspended-bed reactor to generate a product I;
a step S4 of charging the product I into a gas-liquid-solid separator, and passing the separated components through a desulfurization adsorption tower and a first pressure swing adsorption tower for recycling and collection of the hydrogen gas and the hydrogenation catalyst, to obtain an oil phase product I;
a step S5 of mixing the oil phase product I and hydrogen gas, charging the mixture into a fixed-bed reactor for a deep deoxygenation reaction to obtain a mixed product I, and separating the mixed product I using a first gas-liquid separator to obtain an oil phase product II;
a step S6 of mixing the oil phase product II and hydrogen gas, and charging the mixture into a hydroisomerization reactor for an isomerization reaction under an action of a catalyst, to generate a product II; and
a step S7 of charging the product II into a second gas-liquid separator to separate out a gas phase and a liquid phase, and charging the liquid phase product into a fractionation tower to separate out isomerized biodiesel and an aviation fuel product.

The aqueous phase separated out in the step S2 is charged into a first flash separator to separate out a liquid acid catalyst and water, and the liquid acid catalyst is collected and returned to the pre-esterification reactor.

The alcohol solvent separated out by the second flash separator in the step S2 is collected and returned to the pre-esterification reactor.

In the step S2, the pre-esterification product I passes through a first water scrubber and a second water scrubber to remove the metal ions to obtain the esterification product II.

A gas phase product separated out in the step S5 is charged into a second pressure swing adsorption tower to separate out CO, CO₂, hydrogen gas, and light hydrocarbons, and the hydrogen gas is recycled back to the fixed-bed reactor.

The gas phase product separated out in the step S7 is charged into a third pressure swing adsorption tower to separate out hydrogen gas and light hydrocarbons, and the hydrogen gas is recycled back to the hydroisomerization reactor.

In the step S1, the added waste FOG includes but is not limited to one or more of an acidified oil, a hogwash oil, and an illegally recycled waste cooking oil, the added short-chain alcohol includes but is not limited to any one of methanol, ethanol, propanol, and butanol, and the added liquid acid catalyst includes but is not limited to one or more of sulfuric acid, hydrochloric acid, and an acidic ionic liquid.

In the step S1, a pre-esterification temperature is 50°C to 85°C, and a mass ratio of the added waste FOG to the liquid acid catalyst to the short-chain alcohol is 1 :(0.05 to 0.25):(0.80 to 1.50).

In the step S3, the added vulcanizator includes but is not limited to one of sulfur powder, carbon disulfide, dimethyl disulfide, and H₂S, and the added oil-soluble hydrogenation catalyst includes but is not limited to one or more of a molybdate imidazole ionic liquid, a molybdate pyridine ionic liquid, a molybdate quaternary ammonium ionic liquid, and a transition metal chloride ionic liquid, in which the transition metal chloride is one or more of NiCl₂, CoCl₂, CuCl₂, and FeCl₃.

In the step S3, a molar ratio of the esterification product II to the oil-soluble hydrogenation catalyst added is (1000 to 5000): 1, and a molar ratio of the esterification product II to the vulcanizator added is (300 to 1000): 1.

In the step S4, the product I passes through the gas-liquid-solid separator, and a gas phase product is charged into the desulfurization adsorption tower to remove residual H₂S gas, followed by charging into the pressure swing adsorption tower to separate out CO, CO₂, and light hydrocarbons and collect H₂.

In the step S4, the hydrogenation catalyst separated out by the gas-liquid-solid separator is filtered and charged into the suspended-bed reactor for recycling, and the oil phase product I is charged into the fixed-bed reactor for the deep deoxygenation reaction.

The hydrogenation catalyst added in the step S3 is one of NiMoS and CoMoS supported on graphitized mesoporous carbon, and regarding the prehydrogenation reaction, an operating pressure is 2 MPa to 10 MPa, a reaction temperature is 280°C to 400°C, a liquid hourly space velocity is 0.2 h⁻¹ to 8 h⁻¹, and a hydrogen-oil ratio is 500 to 1500.

In the step S6, the catalyst used in the hydroisomerization reactor includes but is not limited to one of Pt/ZrO₂, Pt/Al₂O₃, and Pt/ZrPOₓ.

In the step S6, regarding the hydroisomerization reaction, an operating pressure is 2 MPa to 10 MPa, a reaction temperature is 280°C to 400°C, a liquid hourly space velocity is 0.2 h⁻¹ to 8 h⁻¹, and a hydrogen-oil ratio is 500 to 1500.

In the step S7, an operating temperature in the second gas-liquid separator is 25°C to 45°C, the fractionation tower is of a sieve plate type or a packed type, a temperature at a bottom of the tower is 200°C to 360°C, and an operating pressure is 0.1 MPa to 0.4 MPa.

The technical solution of the present invention has the following advantages.

A. The coupling process for producing biodiesel from a waste FOG provided by the present invention has a stable and reliable process flow and strong adaptability to raw materials. The added pre-esterification process can effectively reduce contents of a fatty acid and a metal in the waste FOG and solve the problem of powdering and inactivation of a catalyst due to a too high acid value and metal deposition. At the same time, a suspended bed pre-hydrogenation reactor is disposed in front of the fixed-bed reactor to remove impurities such as residual metals, phospholipids, and unsaponifiable matters in the waste FOG, so that the fixed-bed deep deoxidation reactor is further effectively protected and a long-term stable operation of the overall system is implemented.

B. In the present invention, a good catalytic conversion efficiency for FOG is obtained, and an alkane yield can reach more than 90%, particularly an isoparaffin yield reaches 40% or more.

### Brief Description of Drawings

In order to illustrate the specific embodiments in the present invention more clearly, the drawings needed to be used in the specific embodiments will be briefly introduced below. Obviously, the drawings in the following description are some embodiments in the present invention. Those having ordinary skills in the art can obtain other drawings based on these drawings without exerting creative work.

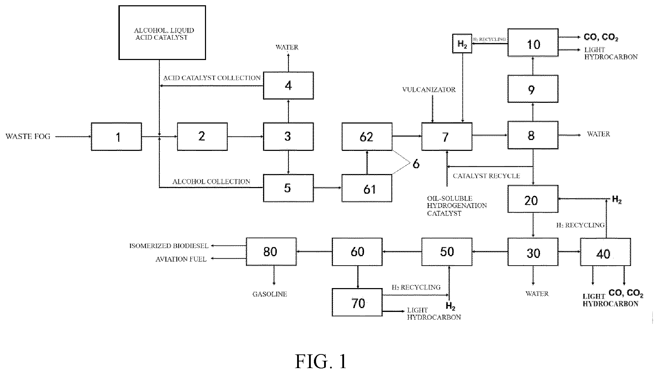

FIG. 1 is a schematic flow diagram of a coupling process for producing biodiesel from a waste FOG according to the present invention.

The reference signs in the drawing are as follows:
1: filter; 2: pre-esterification reactor; 3: liquid-liquid separator; 4: flash separator; 5: second flash separator; 6: water scrubber, 61: first water scrubber, 62: second water scrubber; 7: suspended-bed reactor; 8: gas-liquid-solid separator; 9: desulfurization adsorption tower; 10: first pressure swing adsorption tower; 20: fixed-bed reactor; 30: first gas-liquid separator; 40: second pressure swing adsorption tower; 50: hydroisomerization reactor; 60: second gas-liquid separator; 70: third pressure swing adsorption tower; 80: fractionation tower.

### DESCRIPTION OF EMBODIMENTS

The technical solution of the present invention will be clearly and completely described below with reference to the accompanying drawings. Obviously, the described embodiments are some, not all, of the embodiments in the present invention. The scope of protection is defined in the appended claims.

### Example 1:

As shown in FIG. 1, the present embodiment provides a coupling process for producing biodiesel from a waste FOG. The coupling process includes the following steps.

S1. The waste FOG was heated and dissolved at 100°C, then the dissolved waste FOG was charged into a filter 1 to filter out a solid residue at a temperature of 100°C and a normal pressure, and then the filtrate was mixed with methanol and concentrated sulfuric acid, followed by charging into a pre-esterification reactor 2 for a pre-esterification reaction at 80°C to obtain a pre-esterified mixture. A mass ratio of methanol to FOG was 1.2:1, and a mass ratio of concentrated sulfuric acid to FOG was 0.1:1.

S2. The pre-esterified mixture and deionized water were mixed with each other at a ratio of 1:2, and the mixture passed through a liquid-liquid separator 3 (operating temperature of 60°C) to be separated into an aqueous phase and an organic phase. The aqueous phase was charged into a first flash separator 4 under a condition of 100°C to collect the liquid acid catalyst, and the organic phase was separated using a second flash separator 5 under a condition of 80°C to obtain a pre-esterification product I and an alcohol solvent. The pre-esterification product I passed through a first water scrubber 61 and a second water scrubber 62 to further remove impurities such as metal ions to obtain an esterification product II.

S3. The esterification product II, 1-octyl-3-methylimidazole molybdate, a sulfur powder, and hydrogen gas were pre-hydrogenated in a suspended-bed reactor 7 at 320°C to obtain a product I. A ratio of the esterification product II to 1-octyl-3-methylimidazole molybdate was 1000:1, a ratio of the esterification product II to the sulfur powder was 500:1, a hydrogen-oil ratio was 1000, and an operating pressure was 5 MPa.

S4. The product I was charged into a gas-liquid-solid separator 8, and the separated components passed through a desulfurization adsorption tower 9 and a first pressure swing adsorption tower 10 for recycling and collection of the hydrogen gas and a hydrogenation catalyst, to obtain an oil phase product I.

S5. The oil phase product I and hydrogen gas were mixed with each other, and then the mixture was charged into a fixed-bed reactor 20 for a deep deoxygenation reaction at 320°C to obtain a mixed product I. Regarding the catalyst, graphitized mesoporous carbon (MC) was used as a carrier, CoMoS was used as a dispersed phase, and a loading capacity was 10%. An operating pressure is 5 MPa, a liquid hourly space velocity is 4 h⁻¹, and a hydrogen-oil ratio is 1000. The obtained mixed product I was charged into the first gas-liquid separator 30 to obtain an oil phase product II, and a gas phase product passed the first pressure swing adsorption tower 10 to collect the hydrogen gas.

S6. The oil phase product II and hydrogen gas were mixed with each other, and then the mixture was charged into a hydroisomerization reactor 50 for an isomerization reaction to generate a product II. The product II was charged into a second gas-liquid separator 60 to obtain a gas phase product and an oil phase product. The gas phase product was subjected to product separation using a third pressure swing adsorption tower 70, and the oil phase product was subjected to product separation using a fractionation tower 80 to obtain a final product, i.e., biodiesel, and other fractions, i.e., aviation fuels and gasoline products. Regarding an isomerization catalyst, γ-Al₂O₃ was used as a carrier, Pt was used as a dispersed phase, and a loading capacity was 3%. A reaction temperature was 360°C, an operating pressure was 3 MPa, a liquid hourly space velocity was 4 h⁻¹, and a hydrogen-oil ratio was 1000.

The isomerized biodiesel was qualitatively and quantitatively analyzed using a gas chromatography-mass spectrometer and a gas chromatography-hydrogen flame ion detector. A yield of the obtained alkanes was 94.6%, and a proportion of isoparaffins was 42.1%.

### Example 2:

The present embodiment provides a coupling process for producing biodiesel from a waste FOG. The coupling process includes the following steps.

S1. The waste FOG was heated and dissolved at 100°C, then the dissolved waste FOG was charged into a filter 1 to filter out a solid residue at a temperature of 100°C and a normal pressure, and then the filtrate was mixed with methanol and concentrated sulfuric acid, followed by charging into a pre-esterification reactor 2 for a pre-esterification reaction at 85°C to obtain a pre-esterified mixture. A mass ratio of methanol to FOG was 1.3:1, and a mass ratio of concentrated sulfuric acid to FOG was 0.15: 1.

S2. The pre-esterified mixture and deionized water were mixed with each other at a ratio of 1:2.5, and the mixture passed through a liquid-liquid separator 3 (operating temperature of 60°C) to be separated into an aqueous phase and an organic phase. The aqueous phase was charged into a first flash separator 4 under a condition of 100°C to collect the liquid acid catalyst, and the organic phase was separated using a second flash separator 5 under a condition of 80°C to obtain a pre-esterification product I and an alcohol solvent. The pre-esterification product I passed through a first water scrubber 61 and a second water scrubber 62 to further remove impurities such as metal ions to obtain an esterification product II.

S3. The esterification product II, 1-octyl-3-methylimidazole molybdate, a sulfur powder, and hydrogen gas were pre-hydrogenated in a suspended-bed reactor 7 at 330°C to obtain a product I. A ratio of the esterification product II to 1-octyl-3-methylimidazole molybdate was 2000:1, a ratio of the esterification product II to the sulfur powder was 500:1, a hydrogen-oil ratio was 1000, and an operating pressure was 6 MPa.

S4. The product I was charged into a gas-liquid-solid separator 8, and the separated components passed through a desulfurization adsorption tower 9 and a first pressure swing adsorption tower 10 for recycling and collection of the hydrogen gas and a hydrogenation catalyst, to obtain an oil phase product I.

S5. The oil phase product I and hydrogen gas were mixed with each other, and then the mixture was charged into a fixed-bed reactor 20 for a deep deoxygenation reaction at 320°C to obtain a mixed product I. Regarding the catalyst, graphitized mesoporous carbon (MC) was used as a carrier, CoMoS was used as a dispersed phase, and a loading capacity was 15%. An operating pressure is 5 MPa, a liquid hourly space velocity is 3 h⁻¹, and a hydrogen-oil ratio is 1500. The obtained mixed product I was charged into the first gas-liquid separator 30 to obtain an oil phase product II, and a gas phase product passed the first pressure swing adsorption tower 10 to collect the hydrogen gas.

S6. The oil phase product II and hydrogen gas were mixed with each other, and then the mixture was charged into a hydroisomerization reactor 50 for an isomerization reaction to generate a product II. The product II was charged into a second gas-liquid separator 60 to obtain a gas phase product and an oil phase product. The gas phase product was subjected to product separation using a third pressure swing adsorption tower 70, and the oil phase product was subjected to product separation using a fractionation tower 80 to obtain a final product, i.e., biodiesel, and other fractions, i.e., aviation fuels and gasoline products. Regarding an isomerization catalyst, γ-Al₂O₃ was used as a carrier, Pt was used as a dispersed phase, and a loading capacity was 2%. A reaction temperature was 360°C, an operating pressure was 3 MPa, a liquid hourly space velocity was 3 h⁻¹, and a hydrogen-oil ratio was 1000.

The isomerized biodiesel was qualitatively and quantitatively analyzed using a gas chromatography-mass spectrometer and a gas chromatography-hydrogen flame ion detector. A yield of the obtained alkanes was 91.9%, and a proportion of isoparaffins was 46.3%.

### Example 3:

The present embodiment provides a coupling process for producing biodiesel from a waste FOG. The coupling process includes the following steps.

S1. The waste FOG was heated and dissolved at 90°C, then the dissolved waste FOG was charged into a filter 1 to filter out a solid residue at a temperature of 90°C and a normal pressure, and then the filtrate was mixed with methanol and concentrated sulfuric acid, followed by charging into a pre-esterification reactor 2 for a pre-esterification reaction at 70°C to obtain a pre-esterified mixture. A mass ratio of methanol to FOG was 1.5:1, and a mass ratio of concentrated sulfuric acid to FOG was 0.2:1.

S2. The pre-esterified mixture and deionized water were mixed with each other at a ratio of 1:2, and the mixture passed through a liquid-liquid separator 3 (operating temperature of 60°C) to be separated into an aqueous phase and an organic phase. The aqueous phase was charged into a first flash separator 4 under a condition of 100°C to collect the liquid acid catalyst, and the organic phase was separated using a second flash separator 5 under a condition of 80°C to obtain a pre-esterification product I and an alcohol solvent. The pre-esterification product I passed through a first water scrubber 61 and a second water scrubber 62 to further remove impurities such as metal ions to obtain an esterification product II.

S3. The esterification product II, 1-octyl-3-methylimidazole molybdate, a sulfur powder, and hydrogen gas were pre-hydrogenated in a suspended-bed reactor 7 at 380°C to obtain a product I. A ratio of the esterification product II to 1-octyl-3-methylimidazole molybdate was 3000:1, a ratio of the esterification product II to the sulfur powder was 500:1, a hydrogen-oil ratio was 1500, and an operating pressure was 6 MPa.

S4. The product I was charged into a gas-liquid-solid separator 8, and the separated components passed through a desulfurization adsorption tower 9 and a first pressure swing adsorption tower 10 for recycling and collection of the hydrogen gas and a hydrogenation catalyst, to obtain an oil phase product I.

S5. The oil phase product I and hydrogen gas were mixed with each other, and then the mixture was charged into a fixed-bed reactor 20 for a deep deoxygenation reaction at 320°C to obtain a mixed product I. Regarding the catalyst, graphitized mesoporous carbon (MC) was used as a carrier, CoMoS was used as a dispersed phase, and a loading capacity was 5%. An operating pressure is 5 MPa, a liquid hourly space velocity is 5 h⁻¹, and a hydrogen-oil ratio is 1000. The obtained mixed product I was charged into the first gas-liquid separator 30 to obtain an oil phase product II, and a gas phase product passed the first pressure swing adsorption tower 10 to collect the hydrogen gas.

S6. The oil phase product II and hydrogen gas were mixed with each other, and then the mixture was charged into a hydroisomerization reactor 50 for an isomerization reaction to generate a product II. The product II was charged into a second gas-liquid separator 60 to obtain a gas phase product and an oil phase product. The gas phase product was subjected to product separation using a third pressure swing adsorption tower 70, and the oil phase product was subjected to product separation using a fractionation tower 80 to obtain a final product, i.e., biodiesel, and other fractions, i.e., aviation fuels and gasoline products. Regarding an isomerization catalyst, γ-Al₂O₃ was used as a carrier, Pt was used as a dispersed phase, and a loading capacity was 4%. A reaction temperature was 380°C, an operating pressure was 2 MPa, a liquid hourly space velocity was 8 h⁻¹, and a hydrogen-oil ratio was 1500.

The isomerized biodiesel was qualitatively and quantitatively analyzed using a gas chromatography-mass spectrometer and a gas chromatography-hydrogen flame ion detector. A yield of the obtained alkanes was 92.5%, and a proportion of isoparaffins was 48.4%.

### Example 4:

The present embodiment provides a coupling process for producing biodiesel from a waste FOG. The coupling process includes the following steps.

S1. The waste FOG was heated and dissolved at 90°C, then the dissolved waste FOG was charged into a filter 1 to filter out a solid residue at a temperature of 90°C and a normal pressure, and then the filtrate was mixed with methanol and concentrated sulfuric acid, followed by charging into a pre-esterification reactor 2 for a pre-esterification reaction at 50°C to obtain a pre-esterified mixture. A mass ratio of methanol to FOG was 1.5:1, and a mass ratio of concentrated sulfuric acid to FOG was 0.25: 1.

S2. The pre-esterified mixture and deionized water were mixed with each other at a ratio of 1:2.5, and the mixture passed through a liquid-liquid separator 3 (operating temperature of 60°C) to be separated into an aqueous phase and an organic phase. The aqueous phase was charged into a first flash separator 4 under a condition of 100°C to collect the liquid acid catalyst, and the organic phase was separated using a second flash separator 5 under a condition of 80°C to obtain a pre-esterification product I and an alcohol solvent. The pre-esterification product I passed through a first water scrubber 61 and a second water scrubber 62 to further remove impurities such as metal ions to obtain an esterification product II.

S3. The esterification product II, 1-octyl-3-methylimidazole molybdate, a sulfur powder, and hydrogen gas were pre-hydrogenated in a suspended-bed reactor 7 at 280°C to obtain a product I. A ratio of the esterification product II to 1-octyl-3-methylimidazole molybdate was 1000:1, a ratio of the esterification product II to the sulfur powder was 300:1, a hydrogen-oil ratio was 1000, and an operating pressure was 10 MPa.

S4. The product I was charged into a gas-liquid-solid separator 8, and the separated components passed through a desulfurization adsorption tower 9 and a first pressure swing adsorption tower 10 for recycling and collection of the hydrogen gas and a hydrogenation catalyst, to obtain an oil phase product I.

S5. The oil phase product I and hydrogen gas were mixed with each other, and then the mixture was charged into a fixed-bed reactor 20 for a deep deoxygenation reaction at 340°C to obtain a mixed product I. Regarding the catalyst, graphitized mesoporous carbon (MC) was used as a carrier, CoMoS was used as a dispersed phase, and a loading capacity was 12%. An operating pressure is 5 MPa, a liquid hourly space velocity is 4 h⁻¹, and a hydrogen-oil ratio is 500. The obtained mixed product I was charged into the first gas-liquid separator 30 to obtain an oil phase product II, and a gas phase product passed the first pressure swing adsorption tower 10 to collect the hydrogen gas.

S6. The oil phase product II and hydrogen gas were mixed with each other, and then the mixture was charged into a hydroisomerization reactor 50 for an isomerization reaction to generate a product II. The product II was charged into a second gas-liquid separator 60 to obtain a gas phase product and an oil phase product. The gas phase product was subjected to product separation using a third pressure swing adsorption tower 70, and the oil phase product was subjected to product separation using a fractionation tower 80 to obtain a final product, i.e., biodiesel, and other fractions, i.e., aviation fuels and gasoline products. Regarding an isomerization catalyst, γ-Al₂O₃ was used as a carrier, Pt was used as a dispersed phase, and a loading capacity was 3%. A reaction temperature was 400°C, an operating pressure was 10 MPa, a liquid hourly space velocity was 3 h⁻¹, and a hydrogen-oil ratio was 500.

The isomerized biodiesel was qualitatively and quantitatively analyzed using a gas chromatography-mass spectrometer and a gas chromatography-hydrogen flame ion detector. A yield of the obtained alkanes was 93.3%, and a proportion of isoparaffins was 47.1%.

### Example 5:

The present embodiment provides a coupling process for producing biodiesel from a waste FOG. The coupling process includes the following steps.

S1. The waste FOG was heated and dissolved at 100°C, then the dissolved waste FOG was charged into a filter 1 to filter out a solid residue at a temperature of 100°C and a normal pressure, and then the filtrate was mixed with methanol and concentrated sulfuric acid, followed by charging into a pre-esterification reactor 2 for a pre-esterification reaction at 60°C to obtain a pre-esterified mixture. A mass ratio of methanol to FOG was 0.8:1, and a mass ratio of concentrated sulfuric acid to FOG was 0.2:1.

S2. The pre-esterified mixture and deionized water were mixed with each other at a ratio of 1:2, and the mixture passed through a liquid-liquid separator 3 (operating temperature of 60°C) to be separated into an aqueous phase and an organic phase. The aqueous phase was charged into a first flash separator 4 under a condition of 100°C to collect the liquid acid catalyst, and the organic phase was separated using a second flash separator 5 under a condition of 80°C to obtain a pre-esterification product I and an alcohol solvent. The pre-esterification product I passed through a first water scrubber 61 and a second water scrubber 62 to further remove impurities such as metal ions to obtain an esterification product II.

S3. The esterification product II, 1-octyl-3-methylimidazole molybdate, a sulfur powder, and hydrogen gas were pre-hydrogenated in a suspended-bed reactor 7 at 400°C to obtain a product I. A ratio of the esterification product II to 1-octyl-3-methylimidazole molybdate was 3000:1, a ratio of the esterification product II to the sulfur powder was 500:1, a hydrogen-oil ratio was 500, and an operating pressure was 2 MPa.

S4. The product I was charged into a gas-liquid-solid separator 8, and the separated components passed through a desulfurization adsorption tower 9 and a first pressure swing adsorption tower 10 for recycling and collection of the hydrogen gas and a hydrogenation catalyst, to obtain an oil phase product I.

S5. The oil phase product I and hydrogen gas were mixed with each other, and then the mixture was charged into a fixed-bed reactor 20 for a deep deoxygenation reaction at 300°C to obtain a mixed product I. Regarding the catalyst, graphitized mesoporous carbon (MC) was used as a carrier, CoMoS was used as a dispersed phase, and a loading capacity was 8%. An operating pressure is 2 MPa, a liquid hourly space velocity is 6 h⁻¹, and a hydrogen-oil ratio is 1000. The obtained mixed product I was charged into the first gas-liquid separator 30 to obtain an oil phase product II, and a gas phase product passed the first pressure swing adsorption tower 10 to collect the hydrogen gas.

S6. The oil phase product II and hydrogen gas were mixed with each other, and then the mixture was charged into a hydroisomerization reactor 50 for an isomerization reaction to generate a product II. The product II was charged into a second gas-liquid separator 60 to obtain a gas phase product and an oil phase product. The gas phase product was subjected to product separation using a third pressure swing adsorption tower 70, and the oil phase product was subjected to product separation using a fractionation tower 80 to obtain a final product, i.e., biodiesel, and other fractions, i.e., aviation fuels and gasoline products. Regarding an isomerization catalyst, γ-Al₂O₃ was used as a carrier, Pt was used as a dispersed phase, and a loading capacity was 3%. A reaction temperature was 280°C, an operating pressure was 3 MPa, a liquid hourly space velocity was 0.2 h⁻¹, and a hydrogen-oil ratio was 1000.

The isomerized biodiesel was qualitatively and quantitatively analyzed using a gas chromatography-mass spectrometer and a gas chromatography-hydrogen flame ion detector. A yield of the obtained alkanes was 93.7%, and a proportion of isoparaffins was 45.9%.

### Example 6:

S1. The waste FOG was heated and dissolved at 100°C, then the dissolved waste FOG was charged into a filter 1 to filter out a solid residue at a temperature of 100°C and a normal pressure, and then the filtrate was mixed with methanol and concentrated sulfuric acid, followed by charging into a pre-esterification reactor 2 for a pre-esterification reaction at 50°C to obtain a pre-esterified mixture. A mass ratio of methanol to FOG was 1.1:1, and a mass ratio of concentrated sulfuric acid to FOG was 0.05: 1.

S2. The pre-esterified mixture and deionized water were mixed with each other at a ratio of 1:2, and the mixture passed through a liquid-liquid separator 3 (operating temperature of 60°C) to be separated into an aqueous phase and an organic phase. The aqueous phase was charged into a first flash separator 4 under a condition of 100°C to collect the liquid acid catalyst, and the organic phase was separated using a second flash separator 5 under a condition of 80°C to obtain a pre-esterification product I and an alcohol solvent. The pre-esterification product I passed through a first water scrubber 61 and a second water scrubber 62 to further remove impurities such as metal ions to obtain an esterification product II.

S3. The esterification product II, 1-octyl-3-methylimidazole molybdate, a sulfur powder, and hydrogen gas were pre-hydrogenated in a suspended-bed reactor 7 at 300°C to obtain a product I. A ratio of the esterification product II to 1-octyl-3-methylimidazole molybdate was 5000:1, a ratio of the esterification product II to the sulfur powder was 1000: 1, a hydrogen-oil ratio was 1500, and an operating pressure was 3 MPa.

S4. The product I was charged into a gas-liquid-solid separator 8, and the separated components passed through a desulfurization adsorption tower 9 and a first pressure swing adsorption tower 10 for recycling and collection of the hydrogen gas and a hydrogenation catalyst, to obtain an oil phase product I.

S5. The oil phase product I and hydrogen gas were mixed with each other, and then the mixture was charged into a fixed-bed reactor 20 for a deep deoxygenation reaction at 300°C to obtain a mixed product I. Regarding the catalyst, graphitized mesoporous carbon (MC) was used as a carrier, CoMoS was used as a dispersed phase, and a loading capacity was 5%. An operating pressure is 4 MPa, a liquid hourly space velocity is 8 h⁻¹, and a hydrogen-oil ratio is 1500. The obtained mixed product I was charged into the first gas-liquid separator 30 to obtain an oil phase product II, and a gas phase product passed the first pressure swing adsorption tower 10 to collect the hydrogen gas.

S6. The oil phase product II and hydrogen gas were mixed with each other, and then the mixture was charged into a hydroisomerization reactor 50 for an isomerization reaction to generate a product II. The product II was charged into a second gas-liquid separator 60 to obtain a gas phase product and an oil phase product. The gas phase product was subjected to product separation using a third pressure swing adsorption tower 70, and the oil phase product was subjected to product separation using a fractionation tower 80 to obtain a final product, i.e., biodiesel, and other fractions, i.e., aviation fuels and gasoline products. Regarding an isomerization catalyst, γ-Al₂O₃ was used as a carrier, Pt was used as a dispersed phase, and a loading capacity was 3%. A reaction temperature was 360°C, an operating pressure was 3 MPa, a liquid hourly space velocity was 2 h⁻¹, and a hydrogen-oil ratio was 1000.

The isomerized biodiesel was qualitatively and quantitatively analyzed using a gas chromatography-mass spectrometer and a gas chromatography-hydrogen flame ion detector. A yield of the obtained alkanes was 90.4%, and a proportion of isoparaffins was 40.6%.

The coupling process for producing biodiesel from a waste FOG provided by the present invention has a stable and reliable process flow and strong adaptability to raw materials. The added pre-esterification process can effectively reduce contents of a fatty acid and a metal in the waste FOG and solve the problem of powdering and inactivation of a catalyst due to a too-high acid value and metal deposition. At the same time, a suspended bed pre-hydrogenation reactor is disposed in front of the fixed-bed reactor to remove impurities such as residual metals, phospholipids, and unsaponifiable matters in the waste FOG, so that the fixed-bed deep deoxidation reactor is further effectively protected and a long-term stable operation of the overall system is implemented. In the present invention, a good catalytic conversion efficiency for FOG is obtained, and an alkane yield can reach more than 90%, particularly an isoparaffin yield reaches 40% or more.

The parts not mentioned in the present invention are applicable to the related art.

Obviously, the above embodiments are only examples for clear illustration and are not intended to limit the implementation. For those having ordinary skills in the art, other different forms of changes or modifications can be made based on the above description. An exhaustive list of all implementations is neither necessary nor possible.

## Claims

1. A coupling process for producing biodiesel from a waste FOG comprising:
a step S1 of preheating and dissolving a waste FOG, charging the dissolved waste FOG into a filter (1) to remove solid impurities, and charging the filtrate and a certain amount of a short-chain alcohol and a liquid acid catalyst into a pre-esterification reactor (2) for a pre-esterification reaction to generate a pre-esterified mixture;
a step S2 of charging the pre-esterified mixture into a liquid-liquid separator (3) for liquid-liquid separation to separate out an aqueous phase and an organic phase, separating the organic phase using a second flash separator (5) to obtain a pre-esterification product I and an alcohol solvent, and charging the pre-esterification product I into a water scrubber (6) to remove metal ions to obtain an esterification product II;
a step S3 of pre-hydrogenating the esterification product II, an oil-soluble hydrogenation catalyst, a vulcanizator, and hydrogen gas in a suspended-bed reactor (7) to generate a product I;
a step S4 of charging the product I into a gas-liquid-solid separator (8), and passing the separated components through a desulfurization adsorption tower (9) and a first pressure swing adsorption tower (10) for recycling and collection of the hydrogen gas and the hydrogenation catalyst, to obtain an oil phase product I;
a step S5 of mixing the oil phase product I and hydrogen gas, charging the mixture into a fixed-bed reactor (20) for a deep deoxygenation reaction to obtain a mixed product I, and separating the mixed product I using a first gas-liquid separator (30) to obtain an oil phase product II;
a step S6 of mixing the oil phase product II and hydrogen gas, and charging the mixture into a hydroisomerization reactor (50) for an isomerization reaction under an action of a catalyst, to generate a product II; and
a step S7 of charging the product II into a second gas-liquid separator (60) to separate out a gas phase and a liquid phase, and charging the liquid phase product into a fractionation tower (80) to separate out isomerized biodiesel and an aviation fuel product.

2. The coupling process for producing biodiesel from a waste FOG according to claim 1, wherein the aqueous phase separated out in the step S2 is charged into a first flash separator (4) to separate out a liquid acid catalyst and water, and the liquid acid catalyst is collected and returned to the pre-esterification reactor (2),
the alcohol solvent separated out by the second flash separator (5) in the step S2 is collected and returned to the pre-esterification reactor (2),
a gas phase product separated out in the step S5 is charged into a second pressure swing adsorption tower (40) to separate out CO, CO₂, hydrogen gas, and light hydrocarbons, and the hydrogen gas is recycled back to the fixed-bed reactor (20), and
the gas phase product separated out in the step S7 is charged into a third pressure swing adsorption tower (70) to separate out hydrogen gas and light hydrocarbons, and the hydrogen gas is recycled back to the hydroisomerization reactor (50).

3. The coupling process for producing biodiesel from a waste FOG according to claim 1, wherein in the step S1, the added waste FOG is one or more of an acidified oil, a hogwash oil, and an illegally recycled waste cooking oil, the added short-chain alcohol is one of methanol, ethanol, propanol, and butanol, and the added liquid acid catalyst is one or more of sulfuric acid, hydrochloric acid, and an acidic ionic liquid.

4. The coupling process for producing biodiesel from a waste FOG according to claim 1, wherein in the step S1, a pre-esterification temperature is 50°C to 85°C, and a mass ratio of the added waste FOG to the liquid acid catalyst to the short-chain alcohol is 1:(0.05 to 0.25):(0.80 to 1.50).

5. The coupling process for producing biodiesel from a waste FOG according to claim 1, wherein in the step S3, the added vulcanizator is one of sulfur powder, carbon disulfide, dimethyl disulfide, and H₂S, and the added oil-soluble hydrogenation catalyst is one or more of a molybdate imidazole ionic liquid, a molybdate pyridine ionic liquid, a molybdate quaternary ammonium ionic liquid, and a transition metal chloride ionic liquid, in which the transition metal chloride is one or more of NiCl₂, CoCl₂, CuCl₂, and FeCl₃.

6. The coupling process for producing biodiesel from a waste FOG according to claim 1, wherein in the step S3, a molar ratio of the esterification product II to the oil-soluble hydrogenation catalyst added is (1000 to 5000): 1, and a molar ratio of the esterification product II to the vulcanizator added is (300 to 1000): 1.

7. The coupling process for producing biodiesel from a waste FOG according to claim 1, wherein in the step S4, the product I passes through the gas-liquid-solid separator (8), and a gas phase product is charged into the desulfurization absorption tower (9) to remove residual H₂S gas, followed by charging into the pressure swing adsorption tower (10) to separate out CO, CO₂, and light hydrocarbons and collect H₂, and
in the step S4, the hydrogenation catalyst separated out by the gas-liquid-solid separator (8) is filtered and charged into the suspended-bed reactor (7) for recycling, and the oil phase product I is charged into the fixed-bed reactor (20) for the deep deoxygenation reaction.

8. The coupling process for producing biodiesel from a waste FOG according to claim 1, wherein the hydrogenation catalyst added in the step S3 is one of NiMoS and CoMoS supported on graphitized mesoporous carbon, and regarding the prehydrogenation reaction, an operating pressure is 2 MPa to 10 MPa, a reaction temperature is 280°C to 400°C, a liquid hourly space velocity is 0.2 h⁻¹ to 8 h⁻¹, and a hydrogen-oil ratio is 500 to 1500.

9. The coupling process for producing biodiesel from a waste FOG according to claim 1, wherein in the step S6, the catalyst used in the hydroisomerization reactor (50) is one of Pt/ZrO₂, Pt/Al₂O₃, and Pt/ZrPOₓ.

10. The coupling process for producing biodiesel from a waste FOG according to claim 1, wherein in the step S6, regarding the hydroisomerization reaction, an operating pressure is 2 MPa to 10 MPa, a reaction temperature is 280°C to 400°C, a liquid hourly space velocity is 0.2 h⁻¹ to 8 h⁻¹, and a hydrogen-oil ratio is 500 to 1500.

11. The coupling process for producing biodiesel from a waste FOG according to claim 1, wherein in the step S7, an operating temperature in the second gas-liquid separator (60) is 25°C to 45°C, the fractionation tower (80) is of a sieve plate type or a packed type, a temperature at a bottom of the tower is 200°C to 360°C, and an operating pressure is 0.1 MPa to 0.4 MPa.

## Patentansprüche

1. Kopplungsverfahren zur Herstellung von Biodiesel aus einem FOG-Abfall, umfassend:
einen Schritt S1 des Vorwärmens und Auflösens eines FOG-Abfalls, des Einführens des aufgelösten FOG-Abfalls in einen Filter (1), um feste Verunreinigungen zu entfernen, und des Einführens des Filtrats und einer bestimmten Menge eines kurzkettigen Alkohols und eines flüssigen Säurekatalysators in einen Vorveresterungsreaktor (2) für eine Vorveresterungsreaktion, um eine vorveresterte Mischung zu erzeugen;
einen Schritt S2 des Einbringens der vorveresterten Mischung in einen Flüssigkeit-Flüssigkeit-Abscheider (3) zur Flüssigkeit-Flüssigkeit-Trennung, um eine wässrige Phase und eine organische Phase abzutrennen, Abtrennen der organischen Phase unter Verwendung eines zweiten Flash-Abscheiders (5), um ein Vorveresterungsprodukt I und ein Alkohollösungsmittel zu erhalten, und Einbringen des Vorveresterungsprodukts I in einen Wasserwäscher (6), um Metallionen zu entfernen, um ein Veresterungsprodukt II zu erhalten;
einen Schritt S3 der Vorhydrierung des Veresterungsprodukts II, eines öllöslichen Hydrierungskatalysators, eines Vulkanisators und von Wasserstoffgas in einem Schwebebettreaktor (7) zur Erzeugung eines Produkts I;
einen Schritt S4 des Einfüllens des Produkts I in einen Gas-Flüssigkeit-Feststoff-Abscheider (8) und des Durchleitens der abgetrennten Komponenten durch einen Entschwefelungs-Adsorptionsturm (9) und einen ersten Druckwechsel-Adsorptionsturm (10) zur Rückführung und Sammlung des Wasserstoffgases und des Hydrierkatalysators, um ein Ölphasenprodukt I zu erhalten;
einen Schritt S5 des Mischens des Ölphasenprodukts I und des Wasserstoffgases, des Einbringens der Mischung in einen Festbettreaktor (20) für eine tiefe Desoxygenierungsreaktion, um ein Mischprodukt I zu erhalten, und des Trennens des Mischprodukts I unter Verwendung eines ersten Gas-Flüssigkeits-Abscheiders (30), um ein Ölphasenprodukt II zu erhalten;
einen Schritt S6 des Mischens des Ölphasenprodukts II und Wasserstoffgas und des Einführens der Mischung in einen Hydroisomerisierungsreaktor (50) für eine Isomerisierungsreaktion unter der Einwirkung eines Katalysators, um ein Produkt II zu erzeugen; und
einen Schritt S7 des Einführens des Produkts II in einen zweiten Gas-Flüssigkeits-Abscheider (60), um eine Gasphase und eine Flüssigphase abzutrennen, und des Einführens des Flüssigphasenprodukts in einen Fraktionierturm (80), um isomerisierten Biodiesel und ein Flugkraftstoffprodukt abzutrennen.

2. Kopplungsverfahren zur Herstellung von Biodiesel aus einem FOG-Abfall nach Anspruch 1, wobei die in Schritt S2 abgetrennte wässrige Phase in einen ersten Flash-Separator (4) gegeben wird, um einen flüssigen Säurekatalysator und Wasser abzutrennen, und der flüssige Säurekatalysator gesammelt und in den Vorveresterungsreaktor (2) zurückgeführt wird,
das in dem Schritt S2 durch den zweiten Flash-Abscheider (5) abgetrennte Alkohollösungsmittel gesammelt und in den Vorveresterungsreaktor (2) zurückgeführt wird,
ein in dem Schritt S5 abgetrenntes Gasphasenprodukt in einen zweiten Druckwechseladsorptionsturm (40) eingebracht wird, um CO, CO₂, Wasserstoffgas und leichte Kohlenwasserstoffe abzutrennen, und das Wasserstoffgas in den Festbettreaktor (20) zurückgeführt wird, und
das in dem Schritt S7 abgetrennte Gasphasenprodukt in einen dritten Druckwechseladsorptionsturm (70) eingebracht wird, um Wasserstoffgas und leichte Kohlenwasserstoffe abzutrennen, und das Wasserstoffgas in den Hydroisomerisierungsreaktor (50) zurückgeführt wird.

3. Kupplungsverfahren zur Herstellung von Biodiesel aus einem Abfall-FOG nach Anspruch 1, wobei im Schritt S1 das zugesetzte Abfall-FOG eines oder mehrere aus einem angesäuerten Öl, einem Hogwash-Öl und einem illegal recycelten Altspeiseöl ist, der zugesetzte kurzkettige Alkohol einer aus Methanol, Ethanol, Propanol und Butanol ist und der zugesetzte flüssige Säurekatalysator einer oder mehrere aus Schwefelsäure, Salzsäure und einer sauren ionischen Flüssigkeit ist.

4. Kopplungsverfahren zur Herstellung von Biodiesel aus einem Abfall-FOG nach Anspruch 1, wobei im Schritt S1 die Vorveresterungstemperatur 50°C bis 85°C beträgt und das Massenverhältnis des zugesetzten Abfall-FOG zum flüssigen Säurekatalysator zum kurzkettigen Alkohol 1:(0,05 bis 0,25):(0,80 bis 1,50) beträgt.

5. Kupplungsverfahren zur Herstellung von Biodiesel aus einem FOG-Abfall nach Anspruch 1, wobei in der Schritt S3 der zugesetzte Vulkanisator einer von Schwefelpulver, Schwefelkohlenstoff, Dimethyldisulfid und H₂S ist, und der zugesetzte öllösliche Hydrierungskatalysator einer oder mehrere von einer ionischen Molybdat-Imidazol-Flüssigkeit, einer ionischen Molybdat-Pyridin-Flüssigkeit, einer ionischen quaternären Molybdat-Ammonium-Flüssigkeit und einer ionischen Übergangsmetallchlorid-Flüssigkeit, wobei das Übergangsmetallchlorid eines oder mehrere aus NiCl₂, CoCl₂, CuCl₂ und FeCl₃ ist.

6. Kupplungsverfahren zur Herstellung von Biodiesel aus einem FOG-Abfall nach Anspruch 1, wobei im Schritt S3 das Molverhältnis des Veresterungsprodukts II zu dem zugesetzten öllöslichen Hydrierungskatalysator (1000 bis 5000):1 und das Molverhältnis des Veresterungsprodukts II zu dem zugesetzten Vulkanisator (300 bis 1000):1 beträgt.

7. Kopplungsverfahren zur Herstellung von Biodiesel aus einem FOG-Abfall nach Anspruch 1, wobei in der Stufe S4 das Produkt I den Gas-Flüssigkeit-Feststoff-Abscheider (8) durchläuft und ein Gasphasenprodukt in den Entschwefelungs-Adsorptionsturm (9) eingebracht wird, um restliches H₂S-Gas zu entfernen, gefolgt von der Einbringung in den Druckwechsel-Adsorptionsturm (10), um CO, CO₂ und leichte Kohlenwasserstoffe abzutrennen und H₂ zu sammeln, und
in dem Schritt S4 wird der durch den Gas-Flüssigkeit-Feststoff-Abscheider (8) abgetrennte Hydrierungskatalysator gefiltert und in den Schwebebettreaktor (7) zur Rückführung eingebracht, und das Ölphasenprodukt I wird in den Festbettreaktor (20) für die tiefe Desoxygenierungsreaktion eingebracht.

8. Kopplungsverfahren zur Herstellung von Biodiesel aus einem FOG-Abfall nach Anspruch 1, wobei der in dem Schritt S3 hinzugefügte Hydrierungskatalysator einer von NiMoS und CoMoS ist, der auf graphitiertem mesoporösem Kohlenstoff getragen wird, und bezüglich der Vorhydrierungsreaktion ein Betriebsdruck von 2 MPa bis 10 MPa, eine Reaktionstemperatur von 280°C bis 400°C, eine stündliche Flüssigkeitsraumgeschwindigkeit von 0,2 h⁻¹ bis 8 h⁻¹ und ein Wasserstoff-Öl-Verhältnis von 500 bis 1500 ist.

9. Kopplungsverfahren zur Herstellung von Biodiesel aus einem FOG-Abfall nach Anspruch 1, wobei in dem Schritt S6 der im Hydroisomerisierungsreaktor (50) verwendete Katalysator einer von Pt/ZrO₂, Pt/Al₂O₃ und Pt/ZrPOₓ ist.

10. Kupplungsverfahren zur Herstellung von Biodiesel aus einem FOG-Abfall nach Anspruch 1, wobei in dem Schritt S6 bezüglich der Hydroisomerisierungsreaktion ein Betriebsdruck von 2 MPa bis 10 MPa, eine Reaktionstemperatur von 280°C bis 400°C, eine stündliche Flüssigkeitsraumgeschwindigkeit von 0,2 h⁻¹ bis 8 h⁻¹ und ein Wasserstoff-Öl-Verhältnis von 500 bis 1500 gilt.

11. Kopplungsverfahren zur Herstellung von Biodiesel aus einem FOG-Abfall nach Anspruch 1, wobei in dem Schritt S7 eine Betriebstemperatur in dem zweiten Gas-Flüssigkeits-Abscheider (60) 25°C bis 45°C beträgt, der Fraktionierturm (80) von einem Siebplattentyp oder einem Füllkörpertyp ist, eine Temperatur an einem Boden des Turms 200°C bis 360°C beträgt und ein Betriebsdruck 0,1 MPa bis 0,4 MPa beträgt.

## Revendications

1. Procédé de couplage pour la production de biodiesel à partir d'une matière organique résiduelle, comprenant:
une étape S1 de préchauffage et de dissolution d'un FOG usagé, de chargement du FOG usagé dissous dans un filtre (1) pour éliminer les impuretés solides, et de chargement du filtrat et d'une certaine quantité d'un alcool à chaîne courte et d'un catalyseur acide liquide dans un réacteur de pré-estérification (2) pour une réaction de pré-estérification afin de générer un mélange pré-estérifié;
une étape S2 consistant à charger le mélange pré-estérifié dans un séparateur liquide-liquide (3) pour une séparation liquide-liquide afin de séparer une phase aqueuse et une phase organique, à séparer la phase organique à l'aide d'un second séparateur flash (5) pour obtenir un produit de pré-estérification I et un solvant alcoolique, et à charger le produit de pré-estérification I dans un épurateur d'eau (6) pour éliminer les ions métalliques afin d'obtenir un produit d'estérification II;
une étape S3 de préhydrogénation du produit d'estérification II, d'un catalyseur d'hydrog énation soluble dans l'huile, d'un vulcanisateur et d'hydrogène gazeux dans un réacteur à lit suspendu (7) pour générer un produit I;
une étape S4 consistant à charger le produit I dans un séparateur gaz-liquide-solide (8), et à faire passer les composants séparés dans une tour d'adsorption de désulfuration (9) et une première tour d'adsorption à variation de pression (10) pour le recyclage et la collecte de l'hydrogène gazeux et du catalyseur d'hydrogénation, afin d'obtenir un produit I en phase huileuse;
une étape S5 consistant à mélanger le produit en phase huileuse I et l'hydrogène gazeux, à charger le mélange dans un réacteur à lit fixe (20) pour une réaction de désoxygénation profonde afin d'obtenir un produit mixte I, et à séparer le produit mixte I à l'aide d'un premier séparateur gaz-liquide (30) afin d'obtenir un produit en phase huileuse II;
une étape S6 de mélange du produit en phase huileuse II et d'hydrogène gazeux, et de chargement du mélange dans un réacteur d'hydroisomérisation (50) pour une réaction d'isomérisation sous l'action d'un catalyseur, afin de générer un produit II ; et
une étape S7 consistant à charger le produit II dans un second séparateur gaz-liquide (60) pour séparer une phase gazeuse et une phase liquide, et à charger le produit de la phase liquide dans une tour de fractionnement (80) pour séparer le biodiesel isomérisé et un produit de carburant d'aviation.

2. Procédé de couplage pour la production de biodiesel à partir de déchets FOG selon la revendication 1, dans lequel la phase aqueuse séparée à l'étape S2 est chargée dans un premier séparateur flash (4) pour séparer un catalyseur acide liquide et de l'eau, et le catalyseur acide liquide est collecté et renvoyé dans le réacteur de pré-estérification (2),
le solvant alcoolique séparé par le second séparateur flash (5) à l'étape S2 est collecté et renvoyé dans le réacteur de pré-estérification (2),
un produit en phase gazeuse séparé à l'étape S5 est chargé dans une seconde tour d'adsorption à pression variable (40) pour séparer le CO, le CO₂, l'hydrogène gazeux et les hydrocarbures légers, et l'hydrogène gazeux est recyclé dans le réacteur à lit fixe (20), et
le produit en phase gazeuse séparé à l'étape S7 est chargé dans une troisième tour d'adsorption à pression variable (70) pour séparer l'hydrogène gazeux et les hydrocarbures légers, et l'hydrogène gazeux est recyclé dans le réacteur d'hydroisomérisation (50).

3. Procédé de couplage pour la production de biodiesel à partir d'un FOG usagé selon la revendication 1, dans lequel, à l'étape S1, le FOG usagé ajouté est une ou plusieurs huiles acidifiées, une huile de vidange et une huile de cuisson usagée illégalement recyclée, l'alcool à chaîne courte ajouté est un méthanol, un éthanol, un propanol et un butanol, et le catalyseur acide liquide ajouté est un ou plusieurs acides sulfuriques, un acide chlorhydrique et un liquide ionique acide.

4. Procédé de couplage pour la production de biodiesel à partir d'un FOG usagé selon la revendication 1, dans lequel, à l'étape S1, la température de pré-estérification est comprise entre 50°C et 85°C, et le rapport de masse entre le FOG usagé ajouté, le catalyseur acide liquide et l'alcool à chaîne courte est de 1 :(0,05 à 0,25) :(0,80 à 1,50).

5. Procédé de couplage pour la production de biodiesel à partir de déchets FOG selon la revendication 1, dans lequel, à l'étape S3, le vulcanisateur ajouté est l'un des éléments suivants : poudre de soufre, disulfure de carbone, disulfure de diméthyle et H₂S, et le catalyseur d'hydrogénation soluble dans l'huile ajouté est l'un ou plusieurs des éléments suivants : liquide ionique de molybdate imidazole, un liquide ionique molybdate pyridine, un liquide ionique molybdate ammonium quaternaire, et un liquide ionique chlorure de métal de transition, dans lequel le chlorure de métal de transition est un ou plusieurs NiCl₂, CoCl₂, CuCl₂, et FeCl₃.

6. Procédé de couplage pour la production de biodiesel à partir de déchets FOG selon la revendication 1, dans lequel, à l'étape S3, le rapport molaire entre le produit d'estérification II et le catalyseur d'hydrogénation soluble dans l'huile ajouté est de (1000 à 5000):1, et le rapport molaire entre le produit d'estérification II et le vulcanisateur ajouté est de (300 à 1000): 1.

7. Procédé de couplage pour la production de biodiesel à partir de déchets FOG selon la revendication 1, dans lequel, à l'étape S4, le produit I traverse le séparateur gaz-liquide-solide (8), et un produit en phase gazeuse est chargé dans la tour d'absorption de désulfuration (9) pour éliminer le gaz H₂S résiduel, suivi d'un chargement dans la tour d'adsorption à variation de pression (10) pour séparer le CO, le CO₂ et les hydrocarbures légers et collecter le H₂, et à l'étape S4, le catalyseur d'hydrogénation séparé par le séparateur gaz-liquide-solide (8) est filtré et chargé dans le réacteur à lit suspendu (7) pour recyclage, et le produit en phase huileuse I est chargé dans le réacteur à lit fixe (20) pour la réaction de désoxygénation en profondeur.

8. Procédé de couplage pour la production de biodiesel à partir de déchets FOG selon la revendication 1, dans lequel le catalyseur d'hydrogénation ajouté à l'étape S3 est l'un des NiMoS et CoMoS supportés sur du carbone mésoporeux graphité, et en ce qui concerne la réaction de préhydrogénation, une pression de fonctionnement de 2 MPa à 10 MPa, une température de réaction de 280°C à 400°C, une vitesse de l'espace horaire du liquide de 0,2 h⁻¹ à 8 h⁻¹, et un rapport hydrogène-huile de 500 à 1500.

9. Procédé de couplage pour la production de biodiesel à partir de déchets FOG selon la revendication 1, dans lequel, à l'étape S6, le catalyseur utilisé dans le réacteur d'hydroisomérisation (50) est l'un des catalyseurs suivants : Pt/ZrO₂, Pt/Al₂O₃ et Pt/ZrPOₓ.

10. Procédé de couplage pour la production de biodiesel à partir de déchets FOG selon la revendication 1, dans lequel à l'étape S6, concernant la réaction d'hydroisomérisation, la pression de fonctionnement est de 2 MPa à 10 MPa, la température de réaction est de 280°C à 400°C, la vitesse de l'espace horaire du liquide est de 0,2 h-1 à 8 h-1, et le rapport hydrogène-huile est de 500 à 1500.

11. Procédé de couplage pour la production de biodiesel à partir de déchets FOG selon la revendication 1, dans lequel, à l'étape S7, la température de fonctionnement dans le second séparateur gaz-liquide (60) est comprise entre 25°C et 45°C, la tour de fractionnement (80) est du type à plaque de tamisage ou du type à garnissage, la température au fond de la tour est comprise entre 200°C et 360°C, et la pression de fonctionnement est comprise entre 0,1 MPa et 0,4 MPa.
